# EUROPÄISCHE PATENTSCHRIFT

(11) **EP 2 375 520 B1**
(45) Veröffentlichungstag und Bekanntmachung des Hinweises auf die Patenterteilung: **04.12.2013**
(21) Anmeldenummer: 10165465.5
(22) Anmeldetag: 10.06.2010
(51) Int. Cl.: H02G 3/08

(54) **Montageanordnung, insbesondere für die Hauskommunikation**
Assembly system, in particular for internal communication
Dispositif de montage, notamment pour la communication domestique

(30) Priorität: 07.04.2010 DE 202010004647 U
(43) Veröffentlichungstag der Anmeldung: 12.10.2011
(73) Patentinhaber: GIRA Giersiepen GmbH & Co. KG, 42477 Radevormwald (DE)
(72) Erfinder: Zimmermann, Mike, 48163, Münster (DE); Engels, Ralf, 51381, Leverkusen (DE); Cantillo, Luca, 42119, Wuppertal (DE)
(74) Vertreter: Patentanwälte Dr. Solf & Zapf

(56) Entgegenhaltungen:
- FR-A1- 2 379 868
- JP-A- 2006 203 269
- KR-A- 20040 102 482

## Beschreibung

Die vorliegende Erfindung betrifft eine Montageanordnung, insbesondere für die Hauskommunikation, welche als mindestens ein elektrisches Installationsgerät ein mit einem Trägerteil verbindbares Kameramodul enthält, wobei das Kameramodul einen Grundkörper aufweist, in dem sich eine Öffnung für eine Bildaufnahme befindet, die durch ein aus einer Freigabestellung für die Öffnung mechanisch in eine Verschlussstellung für die Öffnung verstellbares Abdeckteil abdeckbar ist.

Eine ähnliche Anordnung ist aus der deutschen Gebrauchsmusterschrift DE 20 2004 005 624 U1 bekannt. Das Dokument beschreibt insbesondere eine Montageanordnung zur Befestigung von insbesondere zur Tür- und/oder Hauskommunikation benutzbaren, elektrischen Installationsgeräten, umfassend eine Montagewandung und umfassend mindestens ein elektrisches Installationsgerät. Bei solchen Geräten kann es sich beispielsweise um Schalter, Mikrofone, Lautsprecher, Kameras o.ä. handeln. Die Geräte sind in Montageöffnungen der Montagewandung einsetzbar und darin festlegbar. Hierzu wird in der DE 20 2004 005 624 U1 ein spezielles Trägerteil für eine solche Anordnung beschrieben, das dort als Halteteil bezeichnet ist.

Auch die FR 2 379 868 A1 und die KR 2004 0102482 A beschreiben ähnliche, der interaktiven Kommunikation dienende Montageanordnungen.

Solche Montageanordnungen sind insbesondere durch ihre Verwendung in Tür- und Hauskommunikationsanlagen bekannt. Bei diesen Anlagen bestehen die vorhandenen Tür- und Wohnungsstationen aus unterschiedlichen Geräten für den Innen- und Außenbereich, wobei jedes Gerät zudem speziell für die jeweils vorbestimmte Verwendung zum Beispiel als Türstation oder als Wohnungsstation konzipiert ist. Üblicherweise handelt es sich um jeweils einheitliche Geräte mit einem auf einer Montagefläche (zum Beispiel einer Wand), also "auf Putz" (AP) zu installierendem Gerätegehäuse. Eine Installation "unter Putz" (UP) ist ebenfalls möglich.

Im Falle der Hauskommunikation können derartige Anordnungen akustische, visuelle oder audiovisuelle kommunikative Verbindungen zwischen verschiedenen Räumen oder nach außen schaffen, die auf verschiedene Art und Weise hergestellt und auch wieder abgebrochen werden können. So gibt es beispielsweise die Möglichkeit einer ferngesteuerten An- und Abschaltung über Infrarot oder Funk. Wie auch im Computerbereich besteht hier grundsätzlich auch die Gefahr des sogenannten "Hackens" derartiger Verbindungen, d. h. einer missbräuchlichen Benutzung durch Dritte, so z. B. einer Bildübertragung an Unbefugte. Derartige Möglichkeiten können dazu führen, dass die Privatsphäre von Personen ungenügend geschützt ist.

Eine Montageanordnung der eingangs genannten Art ist aus der JP 2006 203269 A bekannt. Dieses Dokument beschreibt im Besonderen ein Sprechmodul, und ein entsprechendes System, welches auch eine Kamera umfasst, sowie ein Steuerungsprogramm für das System und einen Aufzeichnungsträger mit dem Programm. Durch den Gegenstand dieser Patentanmeldung soll das Problem gelöst werden, durch eine Schutzabdeckung eine Verschlechterung der Leistung der Kamera zu verhindern. Dazu ist vorgesehen, die Abdeckung beweglich zu gestalten, so dass sie ein Mikrofon, die Kamera und eine Lichtquelle wahlweise bedeckt oder freigibt.

Ausgehend von diesem Stand der Technik liegt der vorliegenden Erfindung die Aufgabe zugrunde, eine Montageanordnung der eingangs genannten Art zu schaffen, die bei hoher Funktionszuverlässigkeit gegen eine missbräuchliche Benutzung geschützt ist, wobei sie unter Beibehaltung der Vorteile einer bekannten gattungsgemäßen Montageanordnung derart verändert ist, dass sie eine verbesserte Funktionalität aufweist.

Erfindungsgemäß wird dies dadurch erreicht, dass das Abdeckteil ein Betätigungselement für einen Schalter aufweist, welches derart am Abdeckteil angeordnet ist, dass beim Übergang aus der und in die Verschlussstellung des Abdeckteils über den Schalter ein oder mehrere weitere elektrische Installationsgeräte und/oder Baueinheiten geschaltet werden.

In der erfindungsgemäßen Montageanordnung befinden sich also in an sich bekannter Weise neben dem Kameramodul weitere elektrische Installationsgeräte, wie Schalter, Lautsprecher, Mikrofon, Display und/oder elektronische Baueinheiten zur Verbindung mit elektrischen Anschlüssen oder Speichermedien, die vorzugsweise ebenfalls mit dem Trägerteil verbunden sind.

Einerseits kann eine Person so von sich aus - wenn sie dies wünscht - dadurch, dass das Kameramodul einen Grundkörper aufweist, in dem sich eine Öffnung für eine Bildaufnahme befindet, die durch ein aus einer Freigabestellung für die Öffnung mechanisch in eine Verschlussstellung für die Öffnung verstellbares Abdeckteil abdeckbar ist, wobei es sich insbesondere um ein Abdeckteil handeln kann, das manuell verstellbar ist, - unabhängig davon, wie der elektrische Schaltzustand des Kameramoduls ist - die Möglichkeit einer visuellen Kommunikation, mit dem Raum, in dem sich die erfindungsgemäße Installationsanordnung befindet, unterbinden. Eine missbräuchliche Benutzung der Kamera ist dadurch vorteilhafterweise nicht mehr möglich.

In ergonomisch vorteilhafter Weise kann das Abdeckteil als Hebel oder insbesondere als Drehscheibe ausgebildet sein, welches einen Betätigungsabschnitt zur Verstellung und einen Verschlussabschnitt aufweist, der drehbar oder schwenkbar über die Öffnung des Kameramoduls gebracht werden kann, so dass er in der Verschlussstellung des Abdeckteils über dessen Öffnung liegt.

Das Abdeckteil kann dabei ein Anschlagelement aufweisen, welches in der Verschlussstellung an einem, sich insbesondere an dem Trägerteil befindenden Gegenanschlagelement zum Anschlag kommt, und so einerseits signalisiert, dass die Verschlussstellung erreicht ist, andererseits aber auch eine weitere Verstellung unterbindet, die wieder zur Freigabe der Öffung des Kameramoduls führen könnte.

Das Abdeckteil kann mit Vorteil derart in der erfindungsgemäßen Anordung montierbar sein, dass das Abdeckteil im Montagezustand, insbesondere mit der Rändelung oder Zahnung seines Betätigungsabschnitts geringfügig - weniger als 10 mm, bevorzugt weniger als 5mm - über eine Seitenkante des Trägerteils vorsteht, wobei es bevorzugt mit einer Seitenkante eines über dem Trägerteil angeordneten Rahmensteils bündig abschließt. Es ist so einerseits leicht bedienbar, andererseits aber auch wenig auffällig angeordnet.

Zur Erzeugung eines haptischen Eindrucks im Sinne eines Schalt- bzw. Stellgefühls kann sich dabei am Abdeckteil vorteilhafterweise - insbesondere in dem Fall, wenn das Abdeckteil als Drehscheibe ausgebildet ist - eine seitliche Rändelung oder Zahnung befinden.

Weitere vorteilhafte Ausführungen der Erfindung sind in den Unteransprüchen und der nachfolgenden Beschreibung enthalten.

Anhand eines in den Zeichnungen dargestellten Ausführungsbeispiels wird die Erfindung näher erläutert. Es zeigen:
- Fig. 1: eine perspektivische, teilweise explodiert dargestellte Aufsicht auf eine erfindungsgemäße Montageanordnung,
- Fig. 2: in gegenüber Fig. 1 vergrößerter Teilansicht, eine perspektivische Draufsicht auf ein in der erfindungsgemäßen Montageanordnung montiertes Kameramodul mit freigegebener Bildaufnahmeöffung,
- Fig. 3: eine ähnliche Darstellung des Kameramoduls der erfindungsgemäßen Montageanordnung wie in Fig. 2, jedoch mit verschlossener Bildaufnahmeöffung,
- Fig. 3a: eine vergrößerte Detaildarstellung aus Fig. 3,
- Fig. 4: eine im Bereich des Kameramoduls teilgeschnittene perspektivische Ansicht der erfindungsgemäßen Montageanordnung,
- Fig. 5: vergrößert gegenüber Fig. 4, eine Schnittansicht der erfindungsgemäßen Montageanordnung im Bereich des Kameramoduls,
- Fig. 6: eine perspektivische Unteransicht der erfindungsgemäßen Montageanordnung im Bereich des Kameramoduls,
- Fig. 7: eine ähnliche Ansicht der erfindungsgemäßen Montageanordnung wie in Fig. 6, jedoch aufgebrochen, bei Freigabestellung für eine Bildaufnahmeöffnung des Kameramoduls,
- Fig. 8: eine Darstellung der erfindungsgemäßen Montageanordnung wie in Fig. 7 bei Verschlussstellung für die Bildaufnahmeöffnung des Kameramoduls,
- Fig. 9: eine perspektivische, vollständig explodiert dargestellte Ansicht der erfindungsgemäßen Montageanordnung.

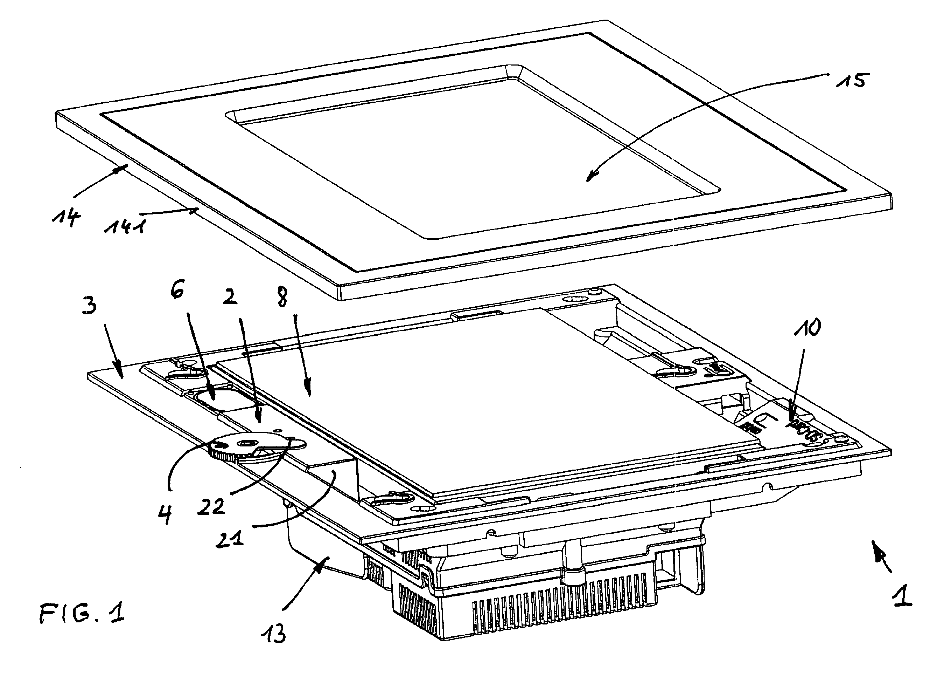

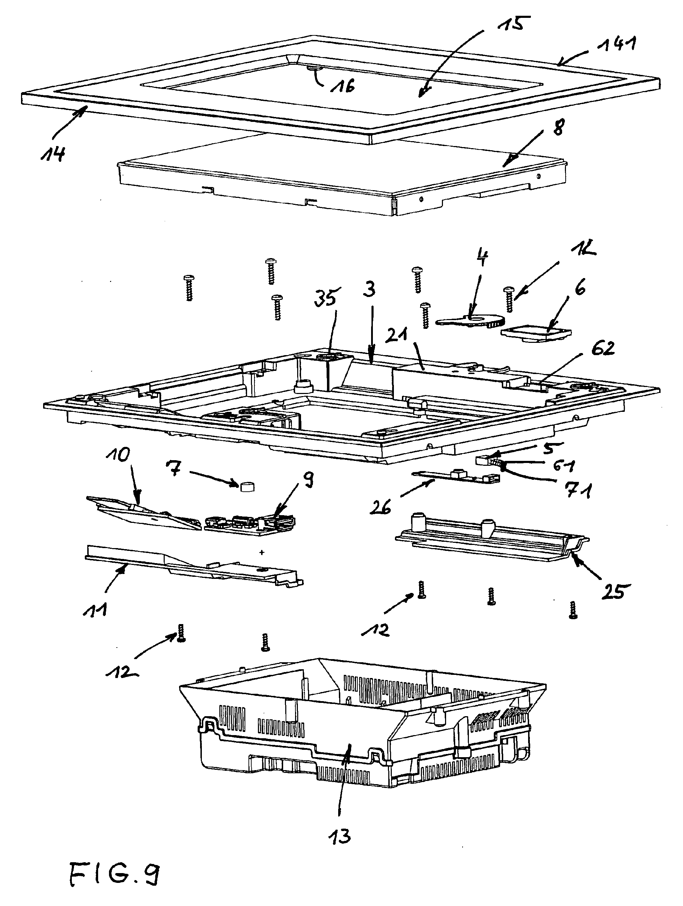

In den Zeichnungsfiguren sind gleiche und einander entsprechende Teile stets mit den gleichen Bezugszeichen versehen, so dass sie in der Regel auch nur einmal beschrieben werden. In den Gesamtdarstellungen der erfindungsgemäßen Montageanordnung - Fig. 1 und 9 - sind dabei jedoch die Details der einzelnen Hauptbestandteile nicht extra mit Bezugszeichen gekennzeichnet.

Wie zunächst Fig. 1 zeigt, umfasst eine erfindungsgemäße Montageanordnung 1, die zur Tür-, aber insbesondere zur Hauskommunikation benutzbar ist, als mindestens ein elektrisches Installationsgerät ein mit einem Trägerteil 3 verbindbares Kameramodul 2.

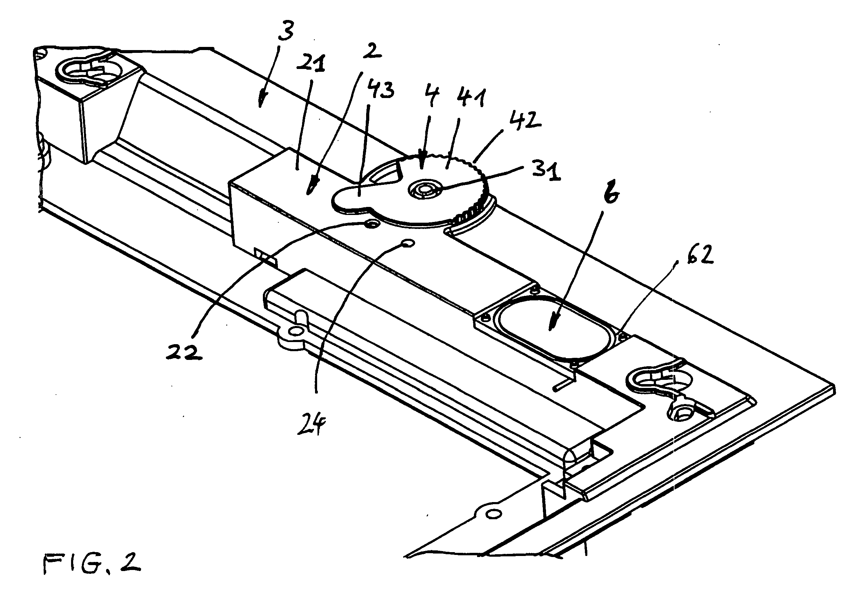

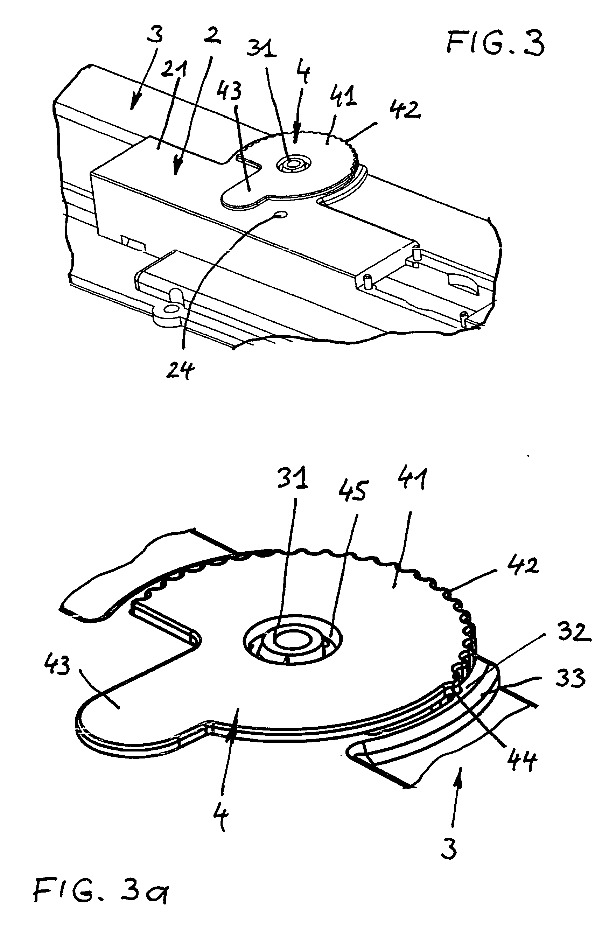

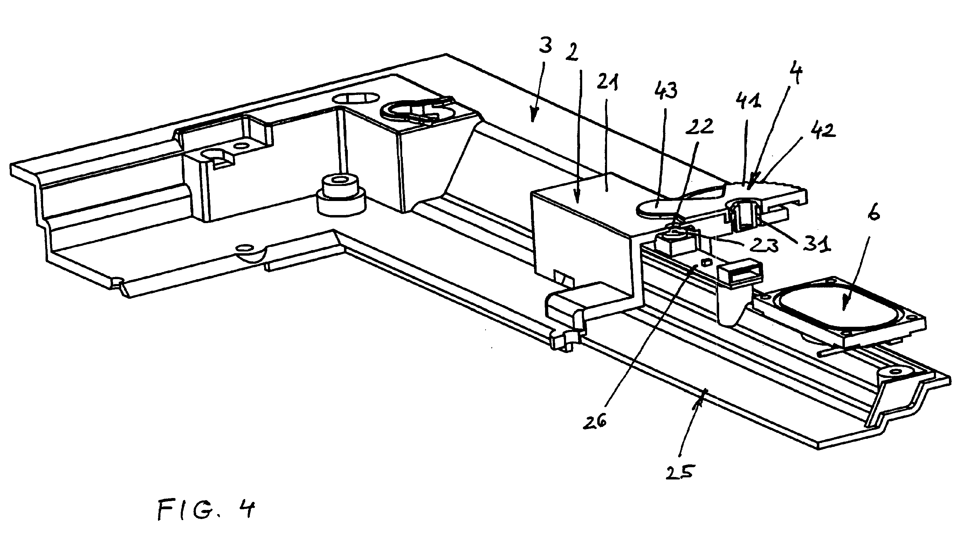

Das Kameramodul 2 ist in Fig. 2 und 3 in größerem Maßstab gezeigt. Es weist einen gehäuseartigen Grundkörper 21 auf, in dem sich eine Öffnung 22 für eine Bildaufnahme befindet. Darin oder darunter kann beispielsweise eine optische Linse 23 angeordnet sein, wie dies Fig. 4 zeigt, sowie ein CCD-Fotosensor.

Um die Gefahr einer missbräuchlichen Benutzung auszuschalten, ist erfindungsgemäß ein Abdeckteil 4 vorgesehen, das aus einer in Fig. 2 gezeigten Freigabestellung für die Öffnung 22 des Kameramoduls 2 mechanisch in eine in Fig. 3 und 3a dargestellte Verschlussstellung für die Öffnung 22 verstellbar ist.

Das Abdeckteil 4 ist dabei in bevorzugter Ausführung als Drehscheibe ausgebildet und ist über einen Betätigungsabschnitt 41 manuell verstellbar. Im Betätigungsabschnitt 41 ist dabei zur Verbesserung der Bedienbarkeit eine seitliche Rändelung oder Zahnung 42 an der Drehscheibe vorgesehen.

Dem Betätigungsabschnitt 41 des Abdeckteils 4 diametral gegenüberliegend befindet sich ein Verschlussabschnitt 43, der durch Drehen über die Öffnung 22 des Kameramoduls 2 schwenkbar ist, so dass er in der in Fig. 3 und 3a gezeigten Verschlussstellung über der Öffnung 22 liegt. Das Abdeckteil 4 ist in seinem Montagezustand dazu über einen Zapfen 31 drehbar am Trägerteil 3 gelagert.

In einer in Fig. 3 nicht abgedeckten Öffnung 24 des Kameramoduls 2 kann sich eine sogenannte Status-LED befinden, also eine Leuchtdiode, die eine Signalinformation darüber liefern kann, ob die Kamera ein- oder ausgeschaltet ist, bzw. auch, ob sie sich im Standby- oder im Aufnahmemodus befindet.

Zur Begrenzung der Bewegung, die zur Abdeckung der Öffnung 22 im Kameramodul 2 führt, kann das Abdeckteil 4 - wie in Fig. 3a dargestellt - ein Anschlagelement 44 aufweisen, welches in der Verschlussstellung an einem am Trägerteil 3 befindlichen Gegenanschlagelement 32 zum Anschlag kommt. Das Anschlagelement 44 des Abdeckteils 4 ist dabei in der dargestellten Ausführung durch einen letzten, gegenüber der übrigen Rändelung 42 überhöhten Zahn gebildet. Das Gegenanschlagelement 32 ist dadurch gebildet, dass das Abdeckteil 4 im Wesentlichen formangepasst von einem auf der Oberfläche des Trägerteils 3 ausgebildeten Wulst 33 umgeben ist, wobei dieser Wulst 33 zur Bildung des Gegenanschlagelements 32 in einem Bereich, wo sich der letzte Zahn der Rändelung 42 bei Vorliegen der Verschlussstellung des Abdeckteils 4 befindet, auf das Abdeckteil 4 hin derart vorspringt, dass der Zahn dort anschlägt.

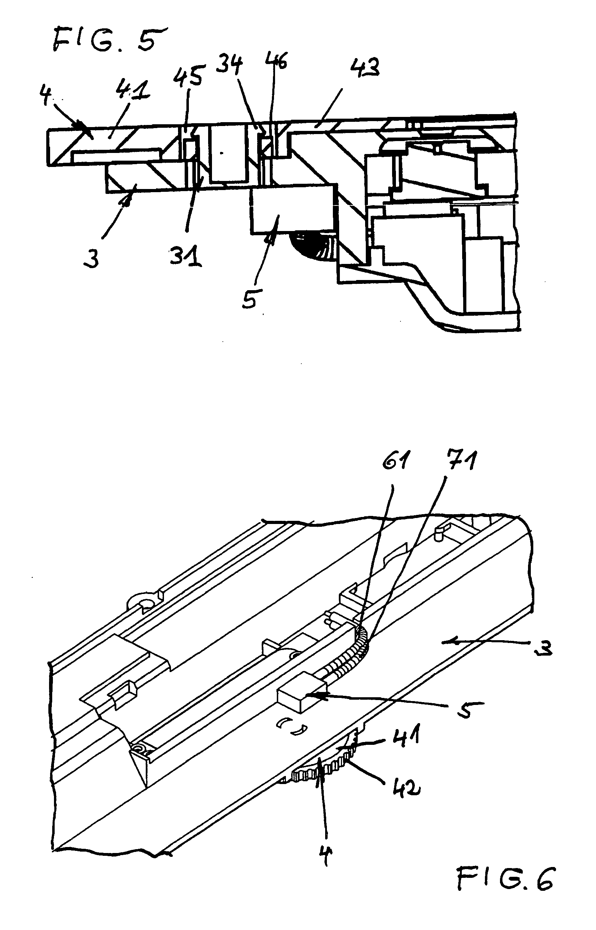

Die Schnittansichten in Fig. 4 und 5 zeigen weitere Einzelheiten der Lagerung des Abdeckteils 4 am Trägerteil 3. Wie daraus hervorgeht, ist insbesondere vorgesehen, dass das Abdeckteil 4 ein Lagerauge 45 - in Fig. 3a, 5 sowie 7 und 8 bezeichnet - aufweist, welches im Montagezustand von dem am Trägerteil 3 befindlichen Rastzapfen 31 durchgriffen wird. In dem Lagerauge 45 befindet sich eine Rastkante 46, die dadurch gebildet ist, dass das Lagerauge 45 mit einer Stufung seines Innendurchmessers ausgeführt ist. Die Rastkante 46 wird im Montagezustand von einem umfangsgemäß an der Spitze des Rastzapfens 31 angeordneten widerhakenförmigen Rastelement 34 hintergriffen. Der Rastzapfen 31 ist dabei hohl und federelastisch und mit einer äußeren Einführschräge am Rastelement 34 ausgeführt, so dass er beim Einführen in das Lagerauge 45 zunächst an seiner Spitze zusammengedrückt wird und, wenn er den engeren Bereich der Stufenbohrung passiert hat, zurückfedert, wobei die Verbindung zwischen Rastkante 46 und Rastelement 34 entsteht. Der Rastzapfen 31 kann dazu im Spitzenbereich auch eine Schlitzung aufweisen.

In der erfindungsgemäßen Montageanordnung 1 können sich, wie bereits erwähnt, weitere elektrische Installationsgeräte befinden. Ein solches Installationsgerät ist zunächst der in Fig. 5 und den weiteren Figuren mit dem Bezugszeichen 5 bezeichnete Schalter, dessen Funktion nachstehend noch genauer erläutert wird. Des Weiteren zeigen Fig. 1, 2, 4 und 9 einen Lautsprecher 6, Fig. 9 ein Mikrofon 7, Fig. 1 und 9 ein Display 8, und Fig. 9 zeigt eine elektronische Baueinheit 9 zur Verbindung mit einem elektrischen Anschluss, wie mit einem USB-Stecker oder einem USB-Stick, sowie Fig. 1 und 9 eine elektronische Baueinheit 10 zur Aufnahme eines Speichermediums, wie einer SD-Memory-Karte.

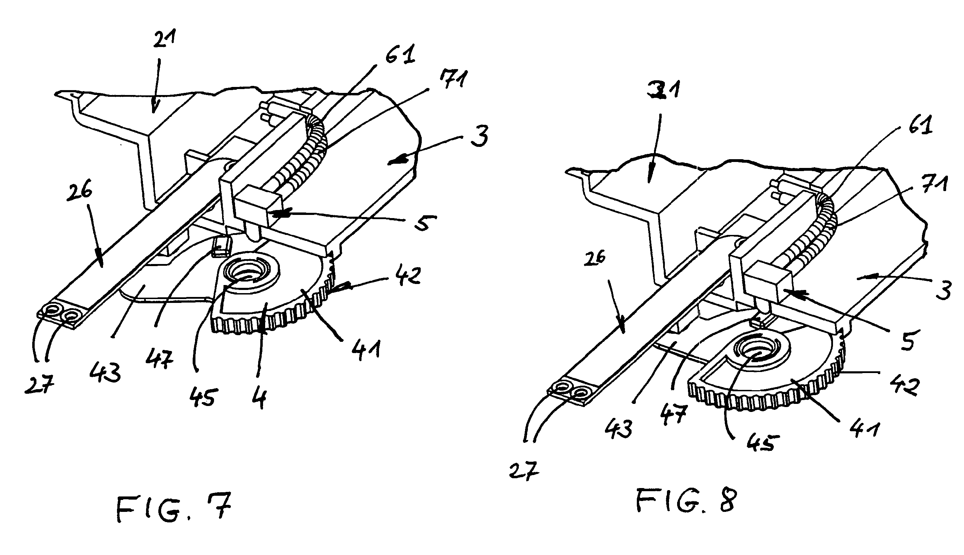

In weiterer vorteilhafter Ausführung kann das Abdeckteil 4 ein Betätigungselement 47 für einen Schalter 5, wie den vorstehend erwähnten, aufweisen. Ein solches Betätigungselement 47 ist in Fig. 7 und 8 als Vorsprung auf der Unterseite des Abdeckteils 4 zu sehen. Das Betätigungselement 47 kann dabei vorteilhafterweise - wie dies Fig. 7 und 8 veranschaulichen - derart am Abdeckteil 4 angeordnet sein, dass beim Übergang des Abdeckteils 4 aus seiner Freigabestellung (Fig. 7) für die Öffnung 22 im Kameramodul 2 in seine Verschlussstellung (Fig. 8) und umgekehrt, über den Schalter 5 ein oder mehrere der weiteren elektrischen Installationsgeräte 6, 7, 8 oder Baueinheiten 9, 10 geschaltet werden können. Insbesondere kann bzw. können in der Verschlussstellung bevorzugt der Lautsprecher 6 und/oder das Mikrofon 7 - besonders bevorzugt gleichzeitig - ausgeschaltet werden. Die entsprechenden elektrischen Leitungen zu diesen Geräten sind mit den Bezgszeichen 61 und 71 bezeichnet. Es kann so gleichzeitig mit der visuellen Kommunikation auch die Audio-Kommunikation abgeschaltet werden.

Der Fachmann kann die erfindungsgemäße Anordnung durch zusätzliche zweckmäßige technische Maßnahmen ergänzen bzw. komplettieren, ohne dass der Rahmen der Erfindung verlassen wird.

So veranschaulicht die in Fig. 9 gezeigte perspektivische Explosionsdarstellung der erfindungsgemäßen Montageanordnung 1 einen bevorzugten Gesamtaufbau. Es ist insbesondere zu sehen, dass das Kameramodul 2 und die anderen vorhandenen elektrischen Installatonsgeräte 6, 7, 8 und/oder Baueinheiten 9, 10 formangepasst in das Trägerteil 3 einsetzbar, mit dem Trägerteil 3 verrastbar, verschraubbar und/oder über zusätzliche mit dem Trägerteil 3 verbindbare Montagesegmente 11, 25 an das Trägerteil 3 klemmbar sind.

So zeigen beispielsweise Fig. 9 und 2 einen Montageplatz 62, an dem der Lautsprecher 6 formangepasst in das Trägerteil 3 einsetzbar ist.Wie bereits erwähnt, ist das Abdeckteil 4 mit dem Trägerteil verrastbar. Mittels des links in der Fig. 9 dargestellten Montagesegments 11, welches mittels Schrauben 12 am Tragerteil 3 befestigt werden kann, können die elektrischen Baueinheiten 9, 10 am Trägerteil 3 festgeklemmt werden. Wie die Unteransichten in Fig. 7 und 8 zeigen, kann der Schalter 5 in eine Montageöffnung des Trägerteils 3 formangepasst eingesetzt bzw. dort verklemmt oder gegebenenfalls zusätzlich stoffschlüssig montiert werden.

Was das Kameramodul 2 betrifft, so ist dessen gehäuseartiger Grundkörper 21 mittels des Montagesegments 25, welches wiederum über Schrauben 12 am Trägerteil 3 befestigt werden kann, an Letzterem montierbar. Das Montagesegment 25 bildet dabei gewissermaßen einen Gehäuseboden des Kameramoduls 2. In einem nicht näher bezeichneten, zwischen dem Grundkörper 21 und dem Montagesegment 25 gebildeten Hohlraum wird dabei das eigentliche Kamerafunktionsteil 26 angeordnet, welches z. B. die optische Linse 23 trägt. Dieser Aufbau wird einerseits durch Fig. 9, aber auch durch Fig. 4, 7 und 8 veranschaulicht. Das Kamerafunktionsteil 26 kann ebenfalls mit dem Montagesegment 25 verschraubt werden. Dies wird beispielsweise durch die in Fig. 7 und 8 mit den Bezugszeichen 27 bezeichneten Schraublöcher deutlich.

Das Trägerteil 3 ist mit allen an ihm montierten weiteren Bauteilen mit seiner Unterseite in ein Gehäuseteil 13 einsetzbar und mit diesem verbindbar, wobei das Gehäuseteil 13 seinerseits wiederum auf oder unter Putz in einer elektrischen Installationsdose oder in einer Rahmenstruktur montierbar ist.

Auf seiner Oberseite ist das Trägerteil 3 durch ein Rahmenteil 14 abdeckbar. Das Rahmenteil 14 weist ein Fenster 15 für das Display 8 auf. Es kann insbesondere über an ihm befindliche Rastelemente 16 und Gegenrasten 35 des Trägerteils 3 am Trägerteil 3 befestigt werden. Alternativ wäre auch eine Verschraubung möglich. Es kann vorgesehen sein, dass das Rahmenteil 14 - zumindest bereichsweise - aus einem durchsichtigen Material besteht und/oder dass eine durchsichtige Platte aus Glas oder Kunststoff in das Rahmenteil 14 einlegbar oder auf das Rahmenteil 14 auflegbar und/oder mit dem Rahmenteil 14 verbindbar ist.

Im Sinne einer leichten Bedienbarkeit, jedoch aber auch wenig auffälligen Anordnung ist es von Vorteil, wenn das Abdeckteil 4 im Montagezustand, insbesondere mit der Rändelung oder Zahnung 42 seines Betätigungsabschnitts 41 mit einer Seitenkante 141 des Rahmensteils 14 bündig abschließt, wobei es jedoch geringfügig über eine Seitenkante 36 des darunter liegenden Trägerteils 3 vorsteht.

Die Erfindung ist nicht auf das beschriebene Ausführungsbeispiel beschränkt, sondern umfasst auch alle im Sinne der Erfindung gleichwirkenden Ausführungen. So könnte z. B. das Abdeckteil 4 auch als Hebel ausgebildet und auch am Kameramodul 2 gelagert sein.

### Bezugszeichen

- 1: Montageanordung

- 2: elektrisches Installationsgerät, Kameramodul in 1
- 21: Grundkörper von 2
- 22: Öffnung in 21 für Bildaufnahme
- 23: optische Linse von 2
- 24: Öffnung in 21 für Status-LED
- 25: Montagesegment für 21 an 3
- 26: Kamerafunktionsteil von 2
- 27: Schraubloch von 26 zur Befestigung an 25

- 3: Trägerteil
- 31: Rastzapfen von 3
- 32: Gegenanschlagelement von 3
- 33: Wulst auf 3
- 34: Rastelement von 31
- 35: Gegenrast von 3 für 16
- 36: Seitenkante von 3

- 4: Abdeckteil
- 41: Betätigungsabschnitt von 4
- 42: Rändelung/Zahnung von 4
- 43: Verschlussabschnitt von 4
- 44: Anschlagelement von 4 für 32
- 45: Lagerauge von 4
- 47: Betätigungselement an 4 für 5
- 5: elektrisches Installationsgerät, Schalter in 1

- 6: elektrisches Installationsgerät, Lautsprecher in 1
- 61: elektrische Leitung zu 6

- 7: elektrisches Installationsgerät, Mikrofon in 1
- 71: elektrische Leitung zu 7

- 8: elektrisches Installationsgerät, Display in 1
- 9: elektrische Baueinheit, Anschluss für USB-Stecker in 1
- 10: elektrische Baueinheit, Anschluss für SD-Karte in 1
- 11: Montagesegment für 9, 10 an 3
- 12: Schraube
- 13: Gehäuse von 1

- 14: Rahmenteil
- 141: Seitenkante von 14

- 15: Fenster in 14 für 8
- 16: Rastelement von 14 für 35

## Patentansprüche

1. Montageanordnung (1) für die Haus- und/oder die Türkommunikation, welche als mindestens ein elektrisches Installationsgerät (2, 5, 6, 7, 8) ein mit einem Trägerteil (3) verbindbares Kameramodul (2) enthält, wobei das Kameramodul (2) einen Grundkörper (21) aufweist, in dem sich eine Öffnung (22) für eine Bildaufnahme befindet, die durch ein aus einer Freigabestellung für die Öffnung (22) mechanisch in eine Verschlussstellung für die Öffnung (22) verstellbares Abdeckteil (4) abdeckbar ist,
**dadurch gekennzeichnet, dass** das Abdeckteil (4) ein Betätigungselement (47) für einen Schalter (5) aufweist, welches derart am Abdeckteil (4) angeordnet ist, dass beim Übergang aus der und in die Verschlussstellung des Abdeckteils (4) über den Schalter (5) ein oder mehrere weitere elektrische Installationsgeräte (6, 7, 8) und/oder Baueinheiten (9, 10) geschaltet werden.

2. Montageanordnung (1) nach Anspruch 1,
**dadurch gekennzeichnet, dass** das Abdeckteil (4) als Hebel oder insbesondere als Drehscheibe ausgebildet ist.

3. Montageanordnung (1) nach Anspruch 1 oder 2,
**dadurch gekennzeichnet, dass** Abdeckteil (4) über einen Betätigungsabschnitt (41) manuell verstellbar ist.

4. Montageanordnung (1) nach Anspruch 2 und 3,
**dadurch gekennzeichnet, dass** im Betätigungsabschnitt (41) eine seitliche Rändelung oder Zahnung (42) an der Drehscheibe ausgebildet ist.

5. Montageanordnung (1) nach einem der Ansprüche 1 bis 4,
**dadurch gekennzeichnet, dass** ein Verschlussabschnitt (43) des Abdeckteils (4) drehbar oder schwenkbar über die Öffnung (22) des Kameramoduls (2) ist und in der Verschlussstellung über der Öffnung (22) liegt.

6. Montageanordnung (1) nach einem der Ansprüche 1 bis 5,
**dadurch gekennzeichnet, dass** das Abdeckteil (4) am Trägerteil (3) gelagert ist.

7. Montageanordnung (1) nach einem der Ansprüche 1 bis 6,
**dadurch gekennzeichnet, dass** das Abdeckteil (4) ein Lagerauge (45) aufweist, welches im Montagezustand von einem am Trägerteil (3) befindlichen Rastzapfen (31) durchgriffen wird.

8. Montageanordnung (1) nach einem der Ansprüche 1 bis 7,
**dadurch gekennzeichnet, dass** das Abdeckteil (4) ein Anschlagelement (44) aufweist, welches in der Verschlussstellung an einem am Trägerteil (3) befindlichen Gegenanschlagelement (32) zum Anschlag kommt.

9. Montageanordnung (1) nach einem der Ansprüche 1 bis 8,
**dadurch gekennzeichnet, dass** das Abdeckteil (4) im Montagezustand, insbesondere mit der Rändelung oder Zahnung (42) seines Betätigungsabschnitts (41) geringfügig über eine Seitenkante (36) des Trägerteils (3) vorsteht, wobei es bevorzugt mit einer Seitenkante (141) eines über dem Trägerteil (3) angeordneten Rahmensteils (14) bündig abschließt.

10. Montageanordnung (1) nach einem der Ansprüche 1 bis 9,
**dadurch gekennzeichnet, dass** mit dem Trägerteil (3) weitere elektrische Installationsgeräte (5, 6, 7, 8), wie Schalter (5), Lautsprecher (6), Mikrofon (7), Display (8) und/oder elektronische Baueinheiten (9, 10) zur Verbindung mit elektrischen Anschlüssen oder Speichermedien verbindbar sind.

11. Montageanordnung (1) nach einem der Ansprüche 1 bis 10,
**dadurch gekennzeichnet, dass** das Kameramodul (2) und/oder andere der gegebenenfalls vorhandenen elektrischen Installatonsgeräte (6, 7, 8) und/oder Baueinheiten (9, 10) formangepasst in das Trägerteil (3) einsetzbar, mit dem Trägerteil (3) verrastbar, verschraubbar und/oder über zusätzliche mit dem Trägerteil (3) verbindbare Montagesegmente (11, 25) an das Trägerteil (3) klemmbar sind.

12. Montageanordnung (1) nach einem der Ansprüche 1 bis 11,
**dadurch gekennzeichnet, dass** das Trägerteil (3) mit einem Gehäuseteil (13) verbindbar ist, welches auf oder unter Putz in einer elektrischen Installationsdose oder in einer Rahmenstruktur montierbar ist.

13. Montageanordnung (1) nach einem der Ansprüche 1 bis 12,
**dadurch gekennzeichnet, dass** das Trägerteil (3) durch ein insbesondere aufrastbares oder anschraubbares Rahmenteil (14) abdeckbar ist.

14. Montageanordnung (1) nach Anspruch 13,
**dadurch gekennzeichnet, dass** in das Rahmenteil (14) eine durchsichtige Platte aus Glas oder Kunststoff einlegbar und/oder mit dem Rahmenteil (14) verbindbar ist.

## Claims

1. A mounting arrangement (1) for house and/or door communication, which, as at least one piece of electrical installation equipment (2, 5, 6, 7, 8), comprises a camera module (2) connectable to a bearer part (3), wherein the camera module (2) has a base body (21) in which there is located an opening (22) for taking pictures, this opening (22) being coverable by a cover part (4) mechanically adjustable from an opening position for the opening into a closing position for the opening (22), **characterised in that** the cover part (4) has an actuating element (47) for a switch (5), which is arranged on the cover part (4) in such a manner that, upon transition from and into the closing position of the cover part (4), one or a plurality of further pieces of electrical installation equipment (6, 7, 8) and/or structural units (9, 10) are switched via the switch (5).

2. A mounting arrangement (1) according to claim 1, **characterised in that** the cover part (4) is in the form of a lever or in particular a rotating disc.

3. A mounting arrangement (1) according to claim 1 or 2, **characterised in that** cover part (4) is manually adjustable via an actuating portion (41).

4. A mounting arrangement (1) according to claim 2 and 3, **characterised in that** in the actuating portion (41), a lateral knurling or toothing (42) is formed on the rotating disc.

5. A mounting arrangement (1) according to any one of claims 1 to 4, **characterised in that** a closing portion (43) of the cover part (4) is rotatable or pivotable over the opening (22) of the camera module (2) and lies over the opening (22) in the closing position.

6. A mounting arrangement (1) according to any one of claims 1 to 5, **characterised in that** the cover part (4) is mounted on the bearer part (3).

7. A mounting arrangement (1) according to any one of claims 1 to 6, **characterised in that** the cover part (4) has a bearing eye (45) through which in the mounted state there reaches a locking pin (31) located on the bearer part (3).

8. A mounting arrangement (1) according to any one of claims 1 to 7, **characterised in that** the cover part (4) has a stop element (44) which in the closing position strikes against a counter stop element (32) located on the bearer part (3).

9. A mounting arrangement (1) according to any one of claims 1 to 8, **characterised in that** in the mounted state, the cover part (4) projects slightly beyond a lateral edge (36) of the bearer part (3), in particular with the knurling or toothing (42) of its actuating portion (41), wherein it is preferably flush with a lateral edge (141) of a frame part (14) arranged above the bearer part (3).

10. A mounting arrangement (1) according to any one of claims 1 to 9, **characterised in that** further pieces of electrical installation equipment (5, 6, 7, 8), such as switch (5), loudspeaker (6), microphone (7), display (8), and/or electronic structural units (9, 10) for connection to electric connections or storage media are connectable to the bearer part (3).

11. A mounting arrangement (1) according to any one of claims 1 to 10, **characterised in that** the camera module (2) and/or others of the optionally present pieces of electrical installation equipment (6, 7, 8) and/or structural units (9, 10) are insertable into the bearer part (3) in a form-matched manner, lockable, screwable to the bearer part (3) and/or clampable, via additional mounting segments (11, 25) connectable to the bearer part (3), to the bearer part (3).

12. A mounting arrangement (1) according to any one of claims 1 to 11, **characterised in that** the bearer part (3) is connectable to a housing part (13) which is mountable in an exposed or concealed manner in an electrical installation socket or in a frame structure.

13. A mounting arrangement (1) according to any one of claims 1 to 12, **characterised in that** the bearer part (3) is coverable by a frame part (14) which can in particular be snapped on or screwed on.

14. A mounting arrangement (1) according to claim 13, **characterised in that** a seethrough sheet of glass or plastics material is insertable into the frame part (14) and/or connectable to the frame part (14).

## Revendications

1. Dispositif de montage (1) pour la communication domestique et/ou de porte qui comprend au moins un appareil d'installation électrique (2, 5, 6, 7, 8) dont un module de caméra (2) pouvant être relié à une partie de support (3), le module de caméra (2) présentant un corps de base (21), dans lequel se trouve une ouverture (22) pour une prise de vue qui peut être recouverte par une partie de recouvrement (4) réglable mécaniquement d'une position de libération pour l'ouverture (22) à une position de fermeture pour l'ouverture (22),
**caractérisé en ce que** la partie de recouvrement (4) présente un élément d'actionnement (47) pour un commutateur (5) qui est disposé sur la partie de recouvrement (4) de telle manière que lors du passage de et dans la position de fermeture de la partie de recouvrement (4), un ou plusieurs autres appareils d'installation (6, 7, 8) électriques et/ou unités de construction (9, 10) sont commutés par le commutateur (5).

2. Dispositif de montage (1) selon la revendication 1,
**caractérisé en ce que** la partie de recouvrement (4) est réalisée sous la forme d'un levier ou notamment un disque rotatif.

3. Dispositif de montage (1) selon la revendication 1 ou 2,
**caractérisé en ce que** la partie de recouvrement (4) est réglable manuellement par une section d'actionnement (41).

4. Dispositif de montage (1) selon les revendications 2 et 3,
**caractérisé en ce qu'**un moletage ou une denture latérale (42) sur le disque rotatif est réalisé(e) dans la section d'actionnement (41).

5. Dispositif de montage (1) selon l'une quelconque des revendications 1 à 4,
**caractérisé en ce qu'**une section de fermeture (43) de la partie de recouvrement (4) est rotative ou pivotante au-dessus de l'ouverture (22) du module de caméra (2) et se trouve dans la position de fermeture au-dessus de l'ouverture (22).

6. Dispositif de montage (1) selon l'une quelconque des revendications 1 à 5,
**caractérisé en ce que** la partie de recouvrement (4) est logée sur la partie de support (3).

7. Dispositif de montage (1) selon l'une quelconque des revendications 1 à 6,
**caractérisé en ce que** la partie de recouvrement (4) présente un oeillet de palier (45) qui est traversé à l'état de montage par un tenon d'encliquetage (31) se trouvant sur la partie de support (3).

8. Dispositif de montage (1) selon l'une quelconque des revendications 1 à 7,
**caractérisé en ce que** la partie de recouvrement (4) présente un élément de butée (44) qui vient en butée dans la position de fermeture contre un élément de butée antagoniste (32) se trouvant sur la partie de support (3).

9. Dispositif de montage (1) selon l'une quelconque des revendications 1 à 8,
**caractérisé en ce que** la partie de recouvrement (4) dépasse légèrement à l'état de montage, notamment avec le moletage ou la denture (42) de sa section d'actionnement (41), d'une arête latérale (36) de la partie de support (3), la partie de recouvrement (4) se terminant de préférence à fleur d'une arête latérale (141) d'une partie de cadre (14) disposée au-dessus de la partie de support (3).

10. Dispositif de montage (1) selon l'une quelconque des revendications 1 à 9,
**caractérisé en ce que** d'autres appareils d'installation électriques (5, 6, 7, 8), tels que des commutateurs (5), des haut-parleurs (6), un microphone (7), un écran d'affichage (8) et/ou des unités de construction électroniques (9, 10) pour la liaison avec des raccordements électriques ou des supports de stockage, peuvent être reliés à la partie de support (3).

11. Dispositif de montage (1) selon l'une quelconque des revendications 1 à 10,
**caractérisé en ce que** le module de caméra (2) et/ou les autres appareils d'installation (6, 7, 8) électriques éventuellement présents et/ou les unités de construction (9, 10) peuvent être insérées par adaptation de forme dans la partie de support (3), encliquetés, vissés avec la partie de support (3) et/ou serrés sur la partie de support (3) par des segments de montage (11, 25) supplémentaires pouvant être reliés à la partie de support (3).

12. Dispositif de montage (1) selon l'une quelconque des revendications 1 à 11,
**caractérisé en ce que** la partie de support (3) peut être reliée à une partie de boîtier (13) qui peut être montée sur ou sous enduit dans une prise d'installation électrique ou dans une structure de cadre.

13. Dispositif de montage (1) selon l'une quelconque des revendications 1 à 12,
**caractérisé en ce que** la partie de support (3) peut être recouverte par une partie de cadre (14) notamment encliquetable ou vissable.

14. Dispositif de montage (1) selon la revendication 13,
**caractérisé en ce qu'**une plaque transparente en verre ou plastique peut être insérée dans la partie de cadre (14) et/ou reliée à la partie de cadre (14).
